# EUROPEAN PATENT APPLICATION

(11) **EP 0 528 591 A2**
(43) Date of publication of application: **24.02.1993**
(21) Application number: 92307178.1
(22) Date of filing: 05.08.1992
(51) Int. Cl.: G09G 3/36, G02F 1/136

(54) **Ballasting device and method of preventing short circuits in LCD switching devices**

(30) Priority: 09.08.1991 US 742812
(71) Applicant: GENERAL ELECTRIC COMPANY, Schenectady, NY 12345 (US)
(72) Inventor: Stewart, Roger Green, New Jersey 08853 (US)
(74) Representative: Pratt, Richard Wilson

(57) **Abstract**

In an active matrix liquid crystal display device, shorts in the gate-insulator region of the switching transistors (12) are prevented from dropping the biasing voltage on the associated select line (13) by fabricating thin film, high resistance current paths (22) between the select lines and the gate-insulator region (27) of the respective switching transistors.

## Description

This invention relates generally to active matrix liquid crystal displays (LCD's) and particularly to a means for ballasting the display elements of such displays.

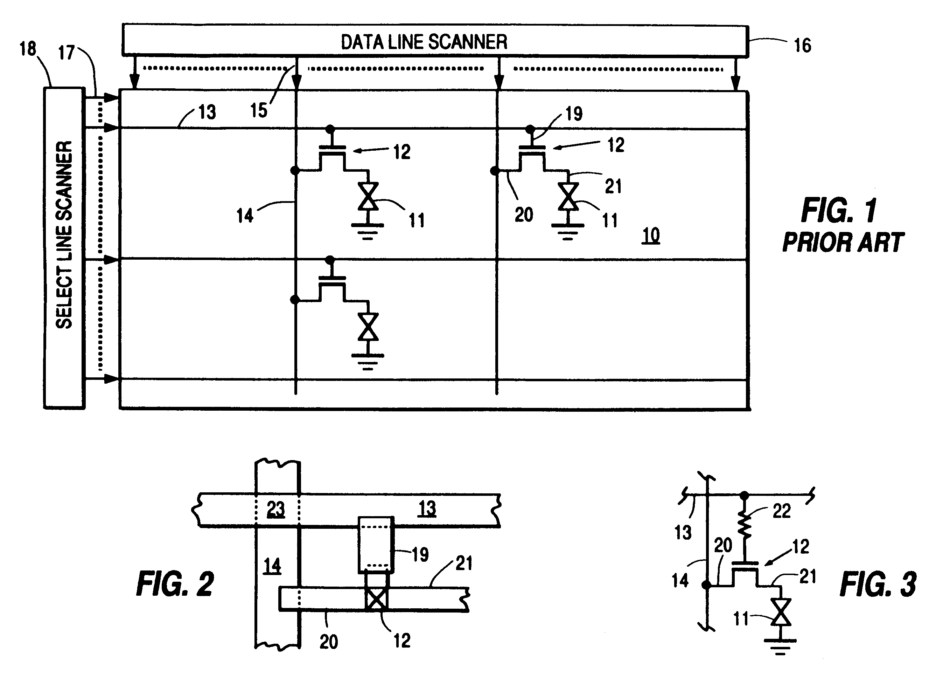

Liquid crystal television and computer displays are known in the art. A simplified prior art liquid crystal display is shown in FIGURE 1. The display includes an array 10 of liquid crystal elements 11 arranged in rows and columns. Each liquid crystal element is associated with a switching device 12, such as a thin film transistor (TFT). The gate of each TFT 12 is connected to a select line 13 by a conductor 19, so that a complete row of TFT's is simultaneously biased "on" by each of the select lines 13. The select lines 13 are individually connected to the output terminals 17 of a select line scanner 18, which provides the biasing voltages to the select lines. The source of each TFT is connected to a data line 14 by a conductor 20. The data lines provide the grey scale signals to the liquid crystal elements associated with a biased TFT 12. The drain of each TFT 12 is coupled to a liquid crystal element 11 by a conductor 21. The data lines 14 are individually connected to the output terminals 15 of a data line scanner 16.

Liquid crystal displays for television receivers and computer monitors have a large number of columns of liquid crystal elements, for example, 1,440. A display with this number of columns and having the standard 3x4 aspect ratio would have approximately 1,080 select lines. A display device with this number of select lines and data lines would include approximately 1.56 million TFT's 12. The probability of one or more of the TFT's 12 being faulty is therefore very high. Some TFT and/or liquid crystal element defects can be tolerated in some applications. However, in active matrix LCD displays, line defects cannot be tolerated. One of the most damaging line defects is a short between a data line and a select line. Such shorts can occur at a data-line/select-line crossover, or in a gate-source junction of a TFT. Shorts at the crossovers can be kept to a minimum by following good fabricating techniques, and many of these defects are correctable. However, gate-to-source shorts in the TFT's are rather common and manifest themselves as data-line/select-line shorts. Such shorts pull down the select line voltage and adversely impact the entire select line. For these reasons, there is a need for means to prevent TFT shorts from manifesting themselves as data line/select line shorts. The present invention fulfills this need.

A display device includes an array of display elements arranged in rows and columns, a plurality of select lines, and a plurality of solid state switching devices. Each of the switching devices has a control electrode responsive to one of the select lines for turning the respective display elements on or off in response to select line voltages. Ballasting devices, for preventing a short in the gate-insulator region of one of the switching devices from adversely affecting the select line voltage, are arranged between the gate-insulator regions and the respective select lines. The ballasting devices provide high resistance current paths between the gate-insulator regions and the associated select lines.

In the drawings:

FIGURE 1 is a simplified showing of a prior art liquid crystal display.

FIGURE 2 is a portion of an LCD layout showing a select line, a data line and a TFT connected between the two lines.

FIGURE 3 is an equivalent circuit of a preferred embodiment of the invention including lateral ballasting.

FIGURE 4 is a preferred embodiment of the invention including vertical ballasting.

In FIGURES 1 and 2, a data line 14 and a select line 13 are insulated from one another in the area 23 where they cross one another. The source of a TFT 12 is connected to data line 14 by a conductor 20. The gate (control electrode) of TFT 12 is connected to a select line 13 by a conductor 19. Typically, conductors 19 and 20 are low resistance current paths; therefore, a gate-to-source short in TFT 12 will manifest itself as a short between the associated data line 14 and the select line 13 to which it is connected. Such a defect cannot be tolerated in television receiver and computer monitor displays. A gate-to-drain short in TFT 12 will prevent the associated crystal element from holding a charge. This is a relatively minor defect and can be either tolerated in many applications, because it affects only one pixel, or eliminated, using TFT redundancy. It is essential that the gate of TFT 12 be responsive to the select line voltage available on select line 13; however, a high current is not required for the TFT to conduct. The gate capacitance is typically 10 femtofarads. Accordingly, the resistance between the gate and select line 13 can be as high as 1,000 megohms without affecting the performance of the TFT. A gate-to-source short can be prevented from manifesting itself as a data-line/select-line short by replacing conductor 19 with a high resistance ballasting device 22, as shown in FIGURE 3. Ballasting device 22 has a resistance value which is low enough to allow normal operation of TFT 12, but sufficiently high to insure that, if the transistor gate is shorted to the source or drain region, the resistance of the ballasting device limits the current sufficiently to keep the transistor short from significantly affecting the voltage on the select line 13. The various resistances have the following relationship:
R_{g}>>R_{b}>>R_{L}, where:
R_{g} = gate resistance, R_{b} = ballasting resistance, and R_{L} = line resistance (including the line driver impedance).
For example: R_{g}=10⁹ ohms, R_{b}=10⁶⁻⁸ ohms, R_{L}= 10⁵ ohms.

The array 10 is fabricated utilizing solid state fabrication techniques. Accordingly, select lines 13, data lines 14 and thin film transistors 12 are thin film layers deposited on an insulative substrate. The TFT's 12 can therefore include either amorphous silicon or polysilicon thin film layers. The high resistance current paths 22 also are thin film layers, composed of the same material as the TFT's 12. The high resistance current paths are either undoped or lightly doped, relative to the doping of the TFT's, to elevate the resistance to the value needed to keep gate-to-source shorts from manifesting themselves as dataline/select-line shorts. The doping material preferably is phosphorous.

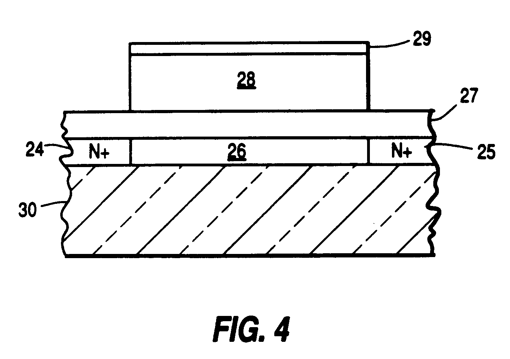

FIGURE 4 is a preferred embodiment including vertical ballasting. A substrate 30 is provided with a thin film layer of either amorphous silicon or polysilicon having highly doped portions to form source and drain regions 24 and 25, respectively, with a channel region 26 therebetween. A gate-insulator layer 27 covers the source, drain and channel regions, and preferably is composed of an SᵢO₂ layer which is approximately 700 A° thick, for example. A ballasting layer 28, which is composed of the same material as the source-drain layer, is much thicker than the source-drain layer, 5,000 A°, for example. A very thin surface portion of the ballasting layer 28 is highly doped, with phosphorous, for example, to form a highly conductive control electrode 29. Relative to the doping of electrode 29, ballasting layer 28 is lightly doped, and can be undoped. The resistance across ballasting layer 28, between control electrode 29 and gate-insulator layer 27 is sufficiently high to prevent a short between gate-insulator layer 27 and source 24 from manifesting itself as a data-line/select-line short and adversely affecting the voltage on select line 13

## Claims

1. A display device having an array (10) of display elements (11) arranged in rows and columns, a plurality of select lines (13) and a plurality of solid state switching devices (12), each of said switching devices having a control electrode (29) responsive to one of said select lines for turning said display devices on or off in response to select line voltages on said select lines; characterized by a ballasting means (22) for preventing a short in the gate insulator region of one of said switching devices (12) from adversely affecting said select line voltage arranged between each of said control electrodes (29) and one of said select lines (13), said ballasting means providing a high resistance current path between each of said control electrodes and the associated select line

2. The display device of claim 1, characterized in that said control electrode (29), said ballasting means (22) and said select line (13) have resistances R_{g} R_{b} and R_{L} , respectively, and R_{g}>>R_{b}>>R_{L}.

3. The display device of claim 2, characterized in that said high resistance current path and said solid state devices (12) each include at least one thin film layer (28; 24, 25) composed of the same material.

4. The display device of claim 3, characterized in that said material is amorphous silicon.

5. The display device of claim 3, characterized in that said material is polysilicon.

6. The display device of claim 4 or 5, characterized in that said high resistance path layer (28) is doped less than said thin film device layers (24, 25) are doped.

7. For a display device having an array (10) of display elements (11) arranged in rows and columns, a plurality of select lines (13) and a plurality of solid state switching devices (12), each of said switching devices having a gate electrode (29) responsive to one of said select lines for turning said display elements on or off in response to select line voltages on said select lines, a method of preventing short circuits in said switching devices from adversely affecting the select line voltage on the associated select line; characterized by the step of providing high resistance current paths between said select lines (13) and each of said gate electrodes (29).

8. The method of claim 7, characterized in that said gate electrode (29), said high resistance current path and said select line (13) have resistances R_{g} R_{b} and R_{L} , respectively, and R_{g}>>R_{b}>>R_{L}.

9. The method of claim 8, further characterized by the step of forming said high resistance current paths and said solid state devices (12) to include at least one thin film layer (28; 24, 25) composed of the same material.

10. The method of claim 9, characterized in that said material is amorphous silicon.

11. The method of claim 9, characterized in that said material is polysilicon.

12. The method of claim 10 or 11, further characterized by the step of doping said high resistance path layer (28) less than said thin film device layers (24, 25).

13. A display device having an array (10) of display elements (11) arranged in rows and columns, a plurality of select lines (13) and a plurality of solid state switching devices (12), each of said switching devices having a gate electrode (27) responsive to one of said select lines for turning said display elements on or off in response to select line voltages on said select lines; characterized by a ballasting means (22) for preventing a short in said switching devices from adversely affecting said select line voltage, comprising:
a layer of semiconductor material having doped regions to form drain (25) and source (24) regions separated by an undoped channel region (26);
a dielectric layer (27) overlaying said drain, source and channel regions; and
a thick layer (28) of semiconductor material overlaying said dielectric layer coincident with said channel region, said thick layer being doped substantially less than said doped regions for forming a high resistance current path across said thick layer, a thin surface portion of said thick layer being highly doped to form said gate electrode (29).

14. The display device of claim 13, characterized in that said gate electrode (29), said ballasting means (22) and said select line (13) have resistances R_{g} R_{b} and R_{L} , respectively, and R_{g}>>R_{b}>>R_{L}.

15. The device of claim 14, characterized in that said doped (24, 25, 28) and undoped (26) layers are formed from amorphous silicon.

16. The device of claim 14, characterized in that said doped (24, 25, 28) and undoped (26) layers are formed from polysilicon.
